(19) Europäisches Patentamt
European Patent Office
Office européen des brevets

(11) Veröffentlichungsnummer: **0 347 610 A2**

(12) **EUROPÄISCHE PATENTANMELDUNG**

(21) Anmeldenummer: 89109614.1

(22) Anmeldetag: 27.05.89

(51) Int. Cl.4: C09D 3/74, C08F 2/50, C08F 220/36, C08J 7/04

(30) Priorität: 09.06.88 DE 3819627

(43) Veröffentlichungstag der Anmeldung: 27.12.89 Patentblatt 89/52

(84) Benannte Vertragsstaaten: BE DE ES FR GB IT NL SE

(71) Anmelder: BAYER AG

D-5090 Leverkusen 1 Bayerwerk(DE)

(72) Erfinder: Haese, Wilfried, Dr.
Hauweg 32, D-4050
Moenchengladbach-Neuwerk(DE)
Erfinder: Scholl, Thomas, Dr.
Elbiner Strasse 33
D-4005 Meerbusch 1(DE)
Erfinder: Fischer, Wolfgang, Dr.
Eschendonk 6
D-4005 Meerbusch 2(DE)
Erfinder: Leuschke, Christian, Dl.
Neckarstrasse 36
D-4047 Dormagen(DE)

(54) **UV-härtbare Beschichtungen für Polycarbonatformkörper.**

(57) Gegenstand der vorliegenden Erfindung sind UV-härtbare Mischungen auf Basis von Urethanacrylaten enthaltend die verschiedenen Komponenten A), B), C) und D) und gegebenenfalls zusätzlich übliche Additive, die Verwendung der UV-härtbaren Mischungen zum Beschichten von Formkörpern aus thermoplastischen Polycarbonaten sowie entsprechend beschichtete Polycarbonatformkörper.

EP 0 347 610 A2

## UV-härtbare Beschichtungen für Polycarbonatformkörper

Gegenstand der vorliegenden Erfindung sind UV-härtbare Mischungen, die dadurch gekennzeichnet sind, daß sie

A) 15 - 60 Gew.-%, bezogen auf die Gewichtssumme von 100 Gew.-% aus A) + B) + C) an Umsetzungsprodukten von Hydroxyalkylacrylaten mit aliphatischen Polyisocyanaten, die wenigstens 2 Isocyanatgruppen und wenigstens eine Uretdion- und/oder Triisocyanurat-und/oder Biuretgruppe pro Molekül enthalten,

B) 30 - 84 Gew.-%, bezogen auf die Gewichtssumme von 100 Gew.-% aus A) + B) + C), an di- oder trifunktionellen (Meth)-acrylaten mit einem Molekulargewicht unter 500,

C) 1 - 10 Gew.-%, bezogen auf die Gewichtssumme von 100 Gew.-% aus A) + B) + C), an Verbindungen mit einer polymerisierbaren Gruppe pro Molekül und einem Molekulargewicht unter 200, und

D) Photoinitiatoren in üblichen Mengen, bezogen auf die Gewichtssumme von 100 Gew.-% aus A) + B) + C), enthalten.

Bevorzugte Mengenverhältnisse sind

**15-40 Gew.-% an Verbindungen A**
**50-80 Gew.-% an Verbindungen B und**
**5-10 Gew.-% an Verbindungen C.**

Der Photoinitiator wird dabei üblicherweise in 1-5 Gew.-%, bezogen auf die Gewichtssumme von 100 Gew.-% aus A) + B) + C) verwendet.

Die Umsetzungsprodukte gemäß Komponente A können sowohl einheitlich als auch Gemische dieser Umsetzungsprodukte sein.

Geeignete Verbindungen gemäß Komponente B) sind Butandiol-1,4-diacrylat, Hexandioldiacrylat, Neopentylglykoldiacrylat, Ethylenglykoldiacrylat, Tripropylenglykoldiacrylat, Tetraethylenglykoldiacrylat, Trimethylolpropantriacrylat, Pentaerythrittriacrylat und Triacrylat von alkoxyliertem Trimethylolpropan sowie Gemische dieser Verbindungen.

Geeignete Verbindungen gemäß Komponente C) sind Acrylsäure, Acrylsäureester, Hydroxyalkylacrylate, N-Vinylpyrrolidon und Gemische dieser Verbindungen.

Besonders bevorzugte Verbindungen gemäß Komponente A) sind Umsetzungsprodukte von Hydroxyethylacrylat mit dem Uretdion und/oder Triisocyanurat und/oder Biuret aus Hexamethylendiisocyanat und deren Gemische und deren höhermolekulare Analoga.

Besonders bevorzugte Verbindungen gemäß Komponente B) sind Hexandioldiacrylat, Trimethylolpropantriacrylat, Tripropylenglykoldiacrylat und deren Mischungen.

Besonders bevorzugte Verbindungen gemäß Komponente C) sind Hydroxyethylacrylat, N-Vinylpyrrolidon und Gemische dieser Verbindungen.

Geeignete Photoinitiatoren gemäß Komponente D) sind die handelsüblichen Produkte. Bevorzugte Photoinitiatoren sind 1-Hydroxy-2-methyl-1-phenyl-propan-1-on und 1-Hydroxycyclohexyl-phenylketon.

Die erfindungsgemäßen Mischungen enthaltend die Komponenten A), B), C) und D) sollen vorzugsweise Viskositäten (100 cp bei 25 °C besitzen. (Die Messung der Viskosität kann mit einem Brookfield Rotationsviskosimeter durchgeführt werden).

Durch die Wahl der Mengenverhältnisse der Komponenten A), B) und C) läßt sich diese Viskosität in den gewünschten Grenzen variieren und auf die jeweils erforderlichen Verarbeitungsbedingungen einstellen.

Die erfindungsgemäßen Mischungen enthaltend die Komponenten A), B), C) und D) sind zur Beschichtung von Formkörpern aus thermoplastischen Polycarbonaten geeignet.

Gegenstand der vorliegenden Erfindung ist somit auch die Verwendung der erfindungsgemäßen Mischungen zum Beschichten von Formkörpern aus thermoplastischen Polycarbonaten.

Die erfindungsgemäßen Mischungen enthaltend die Komponenten A), B), C) und D) werden lösungsmittelfrei auf die Formkörper aus thermoplastischen Polycarbonaten aufgetragen und danach mittels UV-Strahlung gehärtet.

Gegenstand der vorliegenden Erfindung ist somit auch ein Verfahren zum Beschichten von Formkörpern aus thermoplastischen Polycarbonaten, das dadurch gekennzeichnet ist, daß man die erfindungsgemäßen Mischungen enthaltend die Komponenten A), B) C) und D) lösungsmittelfrei in bekannter Weise auf die Formkörper aus Polycarbonat aufträgt und danach mittels UV-Strahlung in bekannter Weise härtet.

Gegenstand der vorliegenden Erfindung sind außerdem die nach dem erfindungsgemäßen Verfahren beschichteten Formkörper aus thermoplastischen Polycarbonaten.

Gegenstand der vorliegenden Erfindung sind außerdem Formkörper aus thermoplastischen Polycarbonaten beschichtet mit einer ausgehärteten Schicht der erfindungsgemäßen Mischungen enthaltend die Komponenten A), B), C) und D).

Polycarbonatformkörper werden aufgrund ihrer ausgezeichneten Eigenschaften, wie Transparenz, Schlagfestigkeit bzw. Stoßfestigkeit und Zugfestigkeit vielfältig verwendet. Die Eigenschaften der Oberfläche des Materials, wie ihre geringe Abrieb- und Kratzfestigkeit und die geringe Beständigkeit gegenüber Lösungsmitteln, sind jedoch für viele Einsatzgebiete ungenügend. Insbesondere neigt die Oberfläche des Materials im Kontakt mit der Außenwelt opak zu werden. Es wurden eine Vielzahl von Methoden zur Beseitigung dieses Mangels vorgeschlagen, z.B. die Verwendung von besonderen Überzügen auf Basis von Siloxan- oder Melaminharzen. Solche Verfahren sind z.B. beschrieben in der US-P 3 707 397 oder US-P 3 843 390.

Diese Überzüge sind jedoch schwierig herzustellen und haben Nachteile, z.B. werden diese Lacke bzw. Überzüge aus Lösungsmitteln appliziert und die Vernetzung wird bei höheren Temperaturen durchgeführt, wobei diese Behandlung derart ist, daß die Eigenschaften des polymeren Substrats negativ beeinflußt werden können. Solche Systeme müssen außerdem mehrschichtig aufgebaut werden und sind so spröde, daß keine Teile damit ausgerüstet werden können, die größeren Biegebeanspruchungen ausgesetzt sind.

Ferner ist bekannt, Formteile aus Polycarbonat mit einem Überzug aus einem Poly(meth)acrylat zu versehen, z.B. durch Beschichten des Formteils mit einem Lack auf Basis Poly(meth)arylat, wie z.B. beschrieben in WO 86/04592 oder durch Heißverpressen von Polycarbonatplatten mit (Meth)acrylatfilmen.

Durch eine derartige Beschichtung von Formteilen aus Polycarbonat kann das System zwar wetterfest ausgerüstet werden, zumal dann, wenn der auf Polycarbonat aufgebrachte Film aus Polyacrylat einen UV-Absorber enthält; durch diese Beschichtungen wird jedoch die Kratzfestigkeit praktisch nicht geändert.

UV-härtende Lacksysteme erscheinen aufgrund ihrer schnellen Aushärtung als Beschichtungssysteme für Polycarbonat besonders geeignet. Beispiele dafür sind in dem US-Patent 3 968 305 und der PCT-Anmeldung WO 80/00968 beschrieben. Beide Systeme sind jedoch einerseits mangels ausreichender Haftung und zum anderen zusätzlich wegen unbefriedigender mechanischen Eigenschaften und unbefriedigender Kratzfestigkeit nicht ideal.

Gemäß EP-PS 0 020 344 beziehungsweise WO-80/00942 werden Polyurethan-haltige Acrylate als Beschichtungen für Polycarbonate vorgesehen. Die Polyurethane enthalten jedoch keine Biuretgruppe oder Triisocyanuratgruppe oder Uretdiongruppe. Die Lacke sind bezüglich Kratzfestigkeit und Witterungsstabilität jedoch noch nicht zufriedenstellend. Entsprechendes gilt auch, wenn man die in den US-Patenten 3 297 745 und 3 673 140 beschriebenenen Urethan-acrylate beziehungsweise Alkyd-urethan-acrylate einsetzt, die in EP-PS 0 020 344, Seite 4, Zeilen 45/46 zitiert sind.

Ein Unterschied zu den Beschichtungen der EP-PS 0 020 344 ergibt sich auch darin, daß dort monofunktionelle Verbindungen ungeeignete Bausteine sind, während für die Beschichtungen gemäß vorliegender Erfindung monofunktionelle Komponenten gemäß Gruppe C) erforderlich sind.

Die DE-P 3 134 157 beschreibt Beschichtungszusammensetzungen, die ebenfalls keine Uretdion-, Isocyanurat-oder Biuretgruppen, wie die erfindungsgemäßen Mischungen, enthalten und im wesentlichen größere Mengen an N-Vinylderivaten geradliniger oder cyclischer sekundärer Amide verwenden. Nachteilig ist dabei die Notwendigkeit, die UV-Bestrahlung mehrmals durchführen zu müssen, um eine gute Kratzfestigkeit zu erhalten. (Sihe Beispiel 1 der DE-OS 3 134 157). Ferner kann eine niedrige Viskosität hierbei nur unter Verwendung großer Anteile monofunktioneller Verbindung, z.B. 50 % N-Vinylpyrrolidon, erhalten werden, wodurch jedoch die Kratzfestigkeit und Lösungsmittelstabilität wie auch Witterungsstabilität wieder reduziert werden. Zudem besteht bei der Verwendung größerer Anteile N-Vinylpyrrolidon die Gefahr des Anlösens, der Eintrübung sowie Spannungsrißauslösung bei Polycarbonat, solange die Beschichtung noch nicht ausgehärtet ist.

Die Möglichkeit, die erfindungsgemäßen Mischungen mit Viskositäten <100 cp ohne Lösungsmittelzusatz einstellen zu können, ist für die Praxis der Polycarbonatbeschichtung deshalb sehr wichtig, da eine Beschichtung von Polycarbonatformkörpern mit unebenen Oberflächen die Applikationsmöglichkeiten von Lacken auf wenige Verfahren einschränkt, insbesondere wenn Beschichtungen hoher optischer Güte verlangt werden. Geeignete Verfahren sind beispielsweise Spritz- und Tauchverfahren, die niedrige Lackviskositäten erfordern. Eine weitere Anforderung ist die Erzielung einer geringen Schichtdicke, da eine zu große Schichtdicke der kratzfesten Beschichtung zu Abplatzungen führen kann und die Haftung auf dem Substrat verschlechtert werden kann.

Erfindungsgemäß geeignete und erforderliche Schichtdicken nach Aushärtung liegen somit unterhalb 50 µm, vorzugsweise zwischen 5 µm und 30 µm.

Die Erzielung derart geringer, aber trotzdem effektiver Schichtdicken, was geringe Viskositäten und guten Lackverlauf verlangt, war bislang mit den üblichen Lacksystemen für thermoplastische Polycarbonate nur durch eine extreme Lackzusammensetzung, beispielsweise durch Erhöhung des Anteils an niederviskosen Acrylaten, erreichbar oder durch Verwendung von Lösungsmitteln für den aufzutragenden Lack möglich, wodurch jedoch negative Eigenschaften einerseits der ausgehärteten Beschichtung oder andererseits des beschichteten Polycarbonatformkörpers in Kauf genommen werden mußten.

Die aliphatischen Polyisocyanate zur Herstellung der Komponente A) der UV-härtbaren Mischungen sollen wenigstens 2 Isocyanatgruppen und wenigstens eine Uretdion-und/oder Triisocyanurat- und/oder Biuretgruppe pro Molekül enthalten. Solche Verbindungen sind nach bekannten Verfahren herstellbar, beispielsweise über eine Dimeri sierung von aliphatischen Diisocyanaten unter Bildung von Uretdiongruppen, durch Trimerisierung unter Bildung von Triisocyanuratgruppen sowie durch partielle Hydrolyse über die Stufe der Carbamidsäure und/oder des Amins unter Bildung biuretverknüpfter Systeme erhältlich.

Sie können beispielsweise durch folgende Strukturformeln (1) bis (3), beschrieben werden.

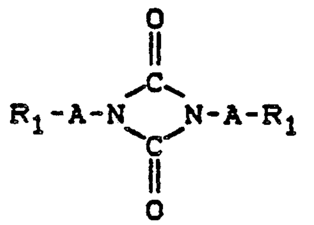
(1)

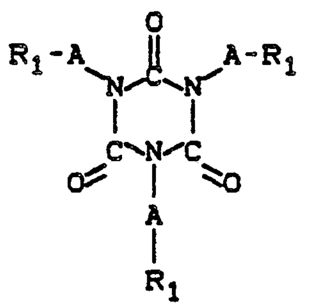
(2)

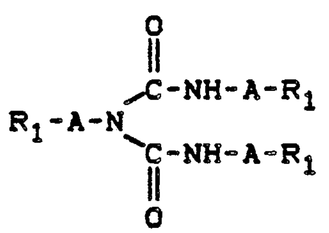
(3)

worin
$R_1$ ein Rest der Formel

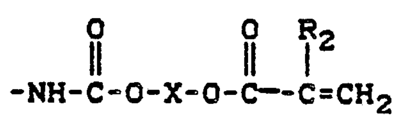

ist, wobei $-R_2$, H oder $CH_3$ und -X- Alkylen mit 2 bis 6 C- Atome, beispielsweise Ethylen ist, und worin
A ein zweibindiger, aliphatischer Kohlenstoffrest mit 2 bis 30 C-Atomen ist, beispielsweise $-(CH_2)_4-$ oder $-(CH_2)_6-$ oder $-(CH_2)_{12}-$ sein kann.

Formel (3) enthält hierbei eine Biuretstruktur, die formal aus 3 Molen Diisocyanat, beispielsweise Hexamethylendiisocyanat, unter Zusatz von 1 Mol $H_2O$ und Abspaltung von 1 Mol $CO_2$ entstanden ist.

Zusätzlich zu den Verbindungen (1) bis (3) kann die Komponente A) auch deren höhenmolekulare Analoga enthalten, die dann mindestens zwei der in Rede stehenden Uretdion-, Triisocyanurat- und/oder Biuretgruppen in einem Molekül enthalten. Selbstverständlich können hier wiederum Gemische dieser Verbindungen eingesetzt werden.

Bevorzugte Verbindungen der Formeln (1) bis (3) sind solche, in denen A $-(CH_2)_6-$ ist.

Produkte dieses Typs sind beispielsweise das Desmodur N 3200® und das Desmodur N 3300®, beides Handelsprodukte der Bayer AG.

Die Herstellung der Komponente A) der UV-härtbaren Mischungen kann nach bekannten Methoden aus den aliphatischen Polyisocyanaten, die wenigstens 2 Isocyanatgruppen und wenigstens eine Uretdion-, Triisocyanurat- und/oder Biuretgruppe pro Molekül enthalten, und den Hydroxyalkylacrylaten unter Verwendung von geeigneten Urethanisierungskatalysoren erfolgen. Die Molekulargewichte der Umsetzungsprodukte gemäß Komponente A) sind im Bereich von 500 bis 3.500, wobei das Gewichtsmittel des Moleku largewichtes 800 bis 1.000 beträgt (Messung mittels Gelpermeationschromatographie, Eichung Polycarbonat).

Die Herstellung der Komponente A) kann auch gegebenenfalls in Gegenwart der anderen Komponenten B), C) und/oder D) erfolgen, sofern diese Komponenten keine mit Isocyanatgruppen reaktiven H-Atomen enthalten.

Die Vermischung der Komponenten A), B), C) und D) erfolgt nach üblichen Verfahren, z.B. bei Raumtemperatur oder leicht erhöhter Temperatur und unter Ausschluß direkter Lichteinwirkung.

Die Mischungen werden nach ihrer Herstellung vorzugsweise filtriert.

Den erfindungsgemäßen Mischungen enthaltend die Komponenten A), B), C) und D) können während oder nach ihrer Herstellung noch für Urethanacrylate übliche Stabilisatoren, Verlaufshilfsmittel, oberflächenaktive Verbindungen, UV-Absorber und Farbstoffe in solchen Mengen zugemischt werden, die die Photopolymerisation und Transparenz der Beschichtungen nicht beeinträchtigt.

Die Beschichtungen der Polycarbonatartikel mittels der erfindungsgemäßen Mischungen enthaltend die Komponenten A), B), C) und D) kann nach üblichen Verfahren, beispielsweise durch Tauchen, Besprühen oder Beschleudern der Polycarbonatformkörper erfolgen, insbesondere eignen sich Spritz- und Tauchverfahren.

Die Härtung der Beschichtungszusammensetzung wird durch UV-Strahlung ausgelöst, wozu handelsübliche UV-Strahler Verwendung finden. Eine Härtung unter Inertatmosphäre ist vorzuziehen, jedoch härten die erfindungsgemäßen Beschichtungszusammensetzungen auch unter Luft zu kratzfesten Beschichtungen aus. Die Verarbeitungszeit, angefangen vom Aufbringen der erfindungsgemäßen Mischungen auf die Polycarbonatformkörper bis zum Aushärten der Beschichtungen soll maximal 5 Minuten betragen, vorzugsweise weniger als 3 Minuten betragen.

Es ist ferner möglich, den beschichteten Polycarbonatformkörper vor der Härtung zu erwärmen, eventuell durch IR-Strahler, bei erhöhter Temperatur mittels UV-Strahlung zu härten oder den Formkörper nach UV-Bestrahlung bei höheren Temperaturen zu tempern, wobei in allen Fällen jedoch die Glastemperatur des Formkörpers nicht überschritten werden darf.

Formkörper aus thermoplastischen Polycarbonaten sind bekannt. Diese thermoplastischen Polycarbonate, denen als OH-gruppenhaltige Bausteine überwiegend Phenole zugrunde liegen, also Diphenole, gegebenenfalls Monophenole und gegebenenfalls mehr als zweiwertige Phenole, sind üblicherweise thermoplastische, aromatische Polycarbonate genannt. Sie, ihre Herstellung und Verwendung zur Herstellung von Formkörpern sind beispielsweise in "Chemistry and Physics of Polycarbonates", Polymer Rev. Vol. 9, Interscience Publishers beschrieben. Sie können gegebenenfalls unter Zusatz bekannter Kettenabbrecher (siehe EP-A 0 010 602, DE-OS 3 143 252), Verzweiger wie Trisphenolen und/oder Isatinbiskresol(phenol) (siehe die deutschen Offenlegungsschriften 1 570 533, 1 595 762, 2 500 092), Stabilisatoren wie Phosphanen und/oder Phosphiten (siehe EP-A 0 143 906, DE-OS 2 140 207) und Entformungsmitteln (siehe die deutschen Offenlegungsschriften 2 507 748, 2 729 485 und 2 064 095) hergestellt werden. Ferner können die Polycarbonate UV-Absorber enthalten.

Die Herstellung der Formkörper aus den thermoplastischen Polycarbonaten erfolgt beispielsweise durch Extrusion oder Spritzguß. Falls man Folien herstellen will, kann dies auch nach dem Gießverfahren erfolgen.

Beispiele für Formkörper aus den thermoplastischen polycarbonaten, die erfindungsgemäß beschichtet werden können, sind Gebrauchsgegenstände aller Art, Elektroartikel, Abdeckplatten, Sichtblenden, Sicherheitsscheiben, Massivplatten und Hohlkammerplatten.

Die Verwendung dieser beschichteten Polycarbonatformkörper kann im Gebrauchsgüterbereich erfolgen, wo die Gefahr des Abriebs und der Bildung von Kratzern besonders groß ist, beispielsweise für Lampenabdeckungen.

## Beispiele

Die Herstellung der beschichteten Polycarbonatformkörper wurde wie folgt durchgeführt.

Eine Platte aus Bisphenol-A-Homopolycarbonat mit den Maßen 40x60x4 mm wurde mittels einer mechanischen Vorrichtung in eine der folgenden Mischungen (Beispiel 1-13) getaucht und gleichmäßig während 120 Sek. aus der Mischung gezogen. Anschließend wurde die so beschichtete Platte in einem Rahmen eingespannt und je einmal von der Ober- bzw. Unterseite mittels einer UV-Quecksilbermitteldruckbestrahlunganlage (Leistung ≧ 80 W/cm) unter Stickstoff gehärtet.

Zur Ermittlung der Kratzfestigkeit wurde die Trübungszunahme nach Berieselung der Probe mit Quarzsand entsprechend dem Sandrieselverfahren (DIN 52 348 E) gemessen. Folgende Werte wurden erhalten.

| Beispiel Nr. | Trübungszunahme $cd/m^2$ lux |
|---|---|
| 1 | 2,0 |
| 2 | 1,9 |
| 3 | 1,8 |
| 4 | 2,7 |
| 5 | 2,7 |
| 6 | 2,3 |
| 7 | 3,1 |
| 8 | 1,6 |
| Vergleichsbespiele | |
| 9 | 22,7 |
| 10 | 9,5 |
| 11 | 29,0 |
| 12 | 4,5 |
| 13 | 4,1 |

Beispiel 9 und 10 entsprechen der Mischung Nr. 1 jedoch mit Zusatz von 10 % Isopropanol als Lösemittel. Beispiel 11 und 12 entsprechen der Mischung Nr. 8 jedoch mit Zusatz von 10 % Toluol als Lösemittel, wobei in Beispiel 9 und 11 das Lösemittel vor der UV-Härtung abgedampft wurde, während in Beispiel 10 und 12 die Lösemittel enthaltende Mischung UV-polymerisiert wurde.

Beispiel 13 entspricht der Mischung Nr. 1 mit Zusatz von 10 % 2-Heptanon, die Mischung wurde ohne vorheriges Entfernen des Lösungsmittels UV-gehärtet.

Zur Beurteilung der Haftung der Beschichtung und deren Witterungsstabilität wurde eine Gitterschnittprüfung durch Einritzen eines Rasters von 6x6 Linien mit einem Abstand von jeweils 1 mm in die Beschichtung mit anschließendem Aufdrücken sowie schnellem Abziehen eines Klebebandes durchgeführt. Die Einteilung in Gt 0 bis Gt 5 erfolgte danach entsprechend der Maßgabe der DIN 53 151.

Folgende Werte wurden erhalten:

| Beispiel Nr. | Gt unbewittert | GT nach 1000 Stunden Xenon-WOM |
|---|---|---|
| 1 | 0 | 0 |
| 2 | 1 | 1 |
| 3 | 1 | 1 |
| 4 | 1 | 0 |
| 5 | 1 | 1 |
| 6 | 1 | 0 |
| 7 | 0 | 0 |
| 8 | 0 | 1 |

Dabei bedeutet ein Gitterschnittwert von 1 kleine Absplitterungen des Lackes an den Schnittpunkten der Gitterlinien, die jedoch bei den vorliegenden harten Beschichtungen nicht eine schlechtere Haftung bedeuten müssen, sondern auch beim Einritzen verursacht werden können.

Folgende Beschichtungszusammensetzungen wurden hergestellt:

| Bsp. Nr. | M. A | M. B | HDA | TMP | Teile NVP | TPGA | NPGA | Phtoi. | Visk. (cP) |
|---|---|---|---|---|---|---|---|---|---|
| 1 | | 76 | 19 | | 5 | | | 3 | 75 |
| 2 | | 57 | 9 | 9 | 6 | 19 | | 3 | 60 |
| 3 | | 57 | 9 | 19 | 5 | 10 | | 3 | 68 |
| 4 | 76 | | 20 | | 4 | | | 3 | 95 |
| 5 | | 76 | | | 5 | | 19 | 3 | 36 |
| 6 | 36 | 36 | 18 | | 10 | | | 3 | 52 |
| 7 | | 72 | 18 | | 10 | | | 3 | 71 |
| 8 | | 64 | 7 | 24 | 5 | | | 3 | 50 |

M. A = Mischung A
M. B = Mischung B
HDA = Hexandioldiacrylat
TMP = Trimethylolpropantriacrylat
N-VP = N-Vinylpyrrolidon
TPGA = Tripropylenglykoldiacrylat
NPGA = Neopentylglykoldiacrylat

Als Photoinitiator wurde in allen Fällen 2-Hydroxy-2-methyl-1-phenyl-propan-1-on verwendet.
Die Mischungen A und B wurden wie folgt hergestellt:

Mischung A

In einem 2 l-Rundhalskolben, der mit Rührer, Innenthermometer und Gaseinleitungsrohr versehen ist, werden

| | | |
|---|---|---|
| 302 | g | Hydroxyethylacrylat |
| 790 | g | Hexandiolbisacrylat |
| 0,5 | g | Di-tert.-butylhydrochinon |
| 0,25 | g | Di-butyl-zinndilaurat |

Bei 40 - 45° C und unter Durchleiten von trockener Luft wurden anschließend 488 g eines Polyisocyanats auf Basis Hexamethylendiisocyanat, das als Hauptkomponente das Triisocyanurat von Hexamethylendiisocyanat enthält und einen NCO-Gehalt von ungefährt 21,5 % besitzt, zugetropft und die Reaktionsmischung nach Zutropfende auf 60 - 65° C solange erhitzt, bis die NCO-Zahl unter 0,1 % abgesunken war, was im allgemeinen nach 6 Stunden der Fall war.

Mischung B

In einem 2 l-Rundhalskolben, der mit Rührer, Innenthermometer und Gaseinleitungsrohr versehen ist, wurden

| | | |
|---|---|---|
| 305 | g | Hydroxyethylacrylat |
| 755 | g | Hexandiolbisacrylat |
| 0,5 | g | Di-tert.-butylhydrochinon |
| 0,25 | g | Di-butyl-zinndilaurat |

vorgelegt.
Bei 40 - 45° C und unter Durchleiten von trockener Luft wurden anschließend 450 g eines Polyisocyanats auf Basis Hexamethylendiisocyanat, das als Hauptkomponente das Biuret aus drei Molekülen Hexamethylendiisocyanat enthält und einen NCO-Gehalt von ca. 23 % besitzt, zugetropft und die Reaktionsmischung nach Zutropfende auf 60 - 65 °C solange erhitzt, bis die NCO-Zahl unter 0,1 % abgesunken war, was im allgemeinen nach 6 Stunden der Fall war.

## Ansprüche

1. UV-härtbare Mischungen, dadurch gekennzeichnet, daß sie

A) 15 - 60 Gew.-%, bezogen auf die Gewichtssumme von 100 Gew.-% aus A) + B) + C) an Umsetzungsprodukten von Hydroxyalkylacrylaten mit aliphatischen Polyisocyanaten, die wenigstens 2 Isocyanatgruppen und wenigstens eine Uretdion-und/oder Triisocyanurat- und/oder Biuretgruppe pro Molekül enthalten,

B) 30 - 84 Gew.-%, bezogen auf die Gewichtssumme von 100 Gew.-% aus A) + B) + C), an di- oder trifunktionellen (Meth)acrylaten mit einem Molekulargewicht unter 500,

C) 1 - 10 Gew.-%, bezogen auf die Gewichtssumme von 100 Gew.-% aus A) + B) + C), an Verbindungen mit einer polymerisierbaren Gruppe pro Molekül und einem Molekulargewicht unter 200, und

D) Photoinitiatoren in üblichen Mengen, bezogen auf die Gewichtssumme von 100 Gew.-% aus A) + B) + C), enthalten.

2. UV-härtbare Mischungen gemäß Anspruch 1, dadurch gekennzeichnet, daß sie

| | | |
|---|---|---|
| A) | 15 - 40 | Gew.-% an Verbindungen A |
| B) | 50 - 80 | Gew.-% an Verbindungen B und |
| C) | 5 - 10 | Gew.-% an Verbindungen C enthalten. |

3. UV-härtbare Mischungen gemäß Anspruch 1, dadurch gekennzeichnet, daß die Komponente A) Umsetzungsprodukte von Hydroxyethylacrylat mit dem Uretdion-und/oder Triisocyanurat- und/oder Biuret auf Basis Hexamethylendiisocyanat darstellt.

4. UV-härtbare Mischungen gemäß Anspruch 1, dadurch gekennzeichnet, daß die Komponente B) Hexandioldiacrylat, Trimethylolpropantriacrylat, Tripropylenglykoldiacrylat oder deren Mischungen darstellt.

5. UV-härtbare Mischungen gemäß Anspruch 1, dadurch gekennzeichnet, daß die Komponente C) Hydroxyethylacrylat, N-Vinylpyrrolidon oder Gemische dieser Verbindungen darstellt.

6. Verwendung der Mischung des Anspruches 1 zum Beschichten von Formkörpern aus thermoplastischen Polycarbonaten.

7. Verwendung gemäß Anspruch 6, dadurch gekennzeichnet, daß die Polycarbonate UV-Absorber enthalten.

8. Verfahren zum Beschichten von Formkörpern aus thermoplastischen Polycarbonaten, dadurch gekennzeichnet, daß man die Mischungen des Anspruchs 1 lösungsmittelfrei in bekannter Weise auf die Formkörper aus Polycarbonat aufträgt und danach mittels UV-Strahlung in bekannter Weise härtet.

9. Beschichtete Polycarbonatformkörper, erhältlich nach dem Verfahren des Anspruchs 8.

10. Formkörper aus thermoplastischen Polycarbonaten beschichtet mit einer ausgehärteten Schicht der Mischungen des Anspruchs 1.